# EUROPEAN PATENT APPLICATION

(11) **EP 3 029 643 A1**
(43) Date of publication of application: **08.06.2016**
(21) Application number: 15197572.9
(22) Date of filing: 02.12.2015
(51) Int. Cl.: G07F 17/42, G06Q 10/10, G07G 5/00, G06Q 20/20, G06Q 30/04

(54) **INFORMATION PROCESSING APPARATUS AND METHOD FOR GENERATING ELECTRONIC RECEIPT BY THE SAME**

(30) Priority: 02.12.2014 JP 2014244385
(71) Applicant: Toshiba TEC Kabushiki Kaisha, Tokyo 141-0032 (JP)
(72) Inventor: GOTANDA, Tsuyoshi, Shinagawa-ku, Tokyo 141-0032 (JP)
(74) Representative: Takeuchi, Maya

(57) **Abstract**

An information processing apparatus comprises a reception module configured to respectively receive the electronic receipt information, stored in a sales object master files individually built, which is generated according to individual sales object information corresponding to sales object specifying information for specifying a sales object; an electronic receipt generation module configured to generate an electronic receipt by adding common sales object information, stored in a common sales object master file, which corresponds to the sales object specifying information to the received electronic receipt information; and an output module configured to output the generated electronic receipt to a reception destination which receives the generated electronic receipt.

## Description

### FIELD

Embodiments described herein relate to an information processing apparatus and a method for generating an electronic receipt by the information processing apparatus.

### BACKGROUND

There is known an electronic receipt system which electronically transfers sales object information and settlement information generated in a settlement processing to a portable terminal of a customer in a case in which the customer purchases sales objects such as commodities or services. In the structure, an electronic receipt management server arranged outside a company collects electronic receipt information generated by a plurality of POS terminals installed in stores run by each company to manage the collected information. Further, the electronic receipt management server outputs an electronic receipt generated based on the collected electronic receipt information to the portable terminal acting as a reception destination carried by the customer.

In this way, for example, the customer can view the electronic receipt through the portable terminal. Moreover, the customer can electronically keep a household account book, using the electronic receipt.

Further, for example, there is a case in which the names of the same sales objects are not the same in different stores or companies because sales object master files which are respectively referred are individually built in the different stores or companies and thus are not unified. Thus, if the electronic receipt information is respectively generated by the POS terminals installed in a plurality of stores or companies, the names thereof are different from each other even if the sales objects are the same, and thus electronic receipt information with the different names of the same sales objects is generated in different stores or companies. In a case in which a household account book is kept with the use of these electronic receipts, the customer may keep accounts with the same sales objects having different sales object names.

Moreover, for example, the categories of the same sales objects are also different in different sales object master files that are individually built in different stores or companies. Thus, if the electronic receipts are generated in a plurality of stores or companies, electronic receipt information with the different categories of the same sales objects is generated in different stores or companies even if sales objects are the same. Therefore, the similar problem as described above occurs in a case in which a household account book application is kept with the use of these electronic receipts.

### DESCRIPTION OF THE DRAWINGS

Fig. 1 is a structural diagram illustrating the general structure of an electronic receipt management system according to an embodiment;
Fig. 2 is a block diagram illustrating the hardware structure of a POS terminal;
Fig. 3 is a memory map illustrating a commodity master file in the POS terminal;
Fig. 4 is a diagram illustrating electronic receipt information generated by the POS terminal;
Fig. 5 is a block diagram illustrating the hardware structure of an electronic receipt server;
Fig. 6 is a block diagram illustrating the hardware structure of the electronic receipt management server;
Fig. 7 is a memory map of a commodity master data base (DB) in the electronic receipt management server;
Fig. 8 is a diagram illustrating the electronic receipt information stored in the electronic receipt management server;
Fig. 9 is a diagram illustrating an electronic receipt generated by the electronic receipt management server;
Fig. 10 is a block diagram illustrating the hardware structure of the portable terminal;
Fig. 11 is a flowchart illustrating the flow of a control processing carried out by the POS terminal;
Fig. 12 is a flowchart illustrating the flow of a control processing carried out by an electronic receipt server;
Fig. 13 is a functional block diagram illustrating the functional structure of the electronic receipt management server;
Fig. 14 is a flowchart illustrating the flow of a control processing carried out by the electronic receipt management server;
Fig. 15 is a flowchart illustrating the flow of a control processing carried out by the portable terminal;
Fig. 16 is a diagram exemplifying the electronic receipt displayed on a display section of the portable terminal; and
Fig. 17 is a diagram exemplifying a household account book displayed on the display section of the portable terminal.

### DETAILED DESCRIPTION

In accordance with an embodiment of the present invention, an information processing apparatus comprises a reception module configured to respectively receive electronic receipt information, stored in a sales object master files individually built, which is generated according to individual sales object information corresponding to sales object specifying information for specifying a sales object; an electronic receipt generation module configured to generate an electronic receipt by adding common sales object information, stored in a common sales object master file, which corresponds to the sales object specifying information to the received electronic receipt information; and an output module configured to output the generated electronic receipt to a reception destination which receives the generated electronic receipt.

Preferably, the electronic receipt generation module generates the electronic receipt without displaying the added common commodity object information as the electronic receipt information.

Preferably, the electronic receipt generation module adds the common sales object information to the individual sales object information if the received electronic receipt information contains the individual sales object information to which the common sales object information is added.

Preferably, the information processing apparatus further comprises an updating module configured to update the common sales object information stored in the common sales object master file according to the common sales object information input from an external device.

Preferably, one of the sales object master files individually built is applied to the common sales object master file.

Thus, the processing speed of the household account book application can be increased, in particular when such an application graphs the obtained results.

Also, the information processing apparatus according to the present invention requires less memory capacity in portable terminals.

The present invention further relates to a method for generating an electronic receipt, including: respectively receiving electronic receipt information, stored in a sales object master files individually built, which is generated according to individual sales object information corresponding to sales object specifying information for specifying a sales object; generating an electronic receipt by adding common sales object information, stored in a common sales object master file, which corresponds to the sales object specifying information to the received electronic receipt information; and outputting the generated electronic receipt to a reception destination which receives the generated electronic receipt.

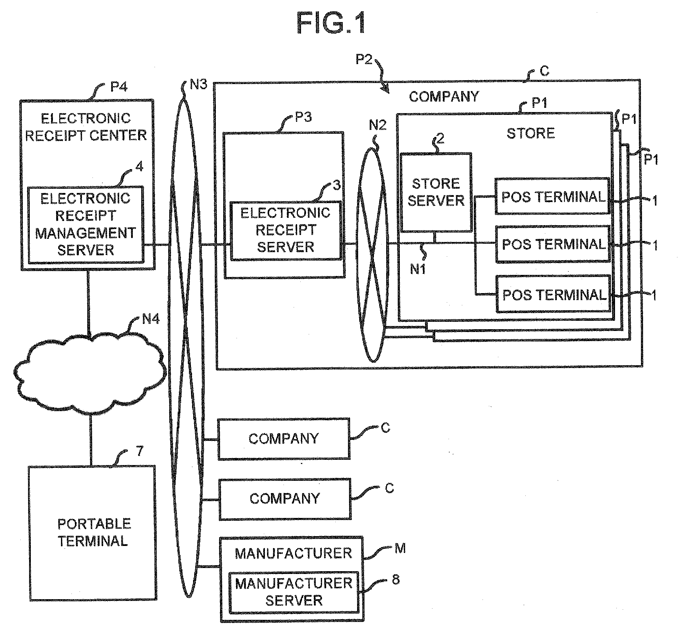

Embodiments of the information processing apparatus are described below in detail with reference to Fig. 1-Fig. 17. In the embodiments, an electronic receipt management server is described as an example of the information processing apparatus.

Further, in the embodiments, a commodity is described as an example of a sales object. The embodiments described below are not to be construed as limiting the present invention.

Fig. 1 is a structural diagram illustrating the general structure of the electronic receipt management system according to the embodiment. The electronic receipt management system is equipped with a sales system P2 for a plurality of companies C which runs a retail business such as shopping centers, supermarkets, department stores and convenience stores and, an electronic receipt management server 4 for managing an electronic receipt. The electronic receipt management system is further equipped with a portable terminal 7 and a manufacturer server 8 arranged in a manufacturer M. There may be more than one manufacturer M.

The company C runs a plurality of stores P1 in each of which one or more POS (Point of Sales) terminals 1 and a store server 2 are arranged. Further, an electronic receipt server 3 is arranged in the headquarters P3 of the company C. The electronic receipt management server 4 is arranged in an electronic receipt center P4. The portable terminal 7 is carried by a customer as a member or an operator. The manufacturer server 8 is arranged in the manufacturer M which manufactures a commodity sold in the store P1.

The POS terminal 1 is connected with the store server 2 via a communication line N1 such as a LAN (Local Area Network). The POS terminal 1 and the store server 2 are connected with the electronic receipt server 3 via a network N2 which connects each store P1 with the headquarters P3. The network N2 is an Internet or a dedicated line such as a VPN (Virtual Private Network).

The POS terminal 1 is a commodity sales data processing apparatus which carries out a commodity sales processing and a settlement processing for the commodities sold in the store P1. The POS terminal 1 carries out a transaction processing for the commodities sold in the store P1. The transaction processing starts with a commodity sales processing and ends with the completion of a settlement processing for one customer.

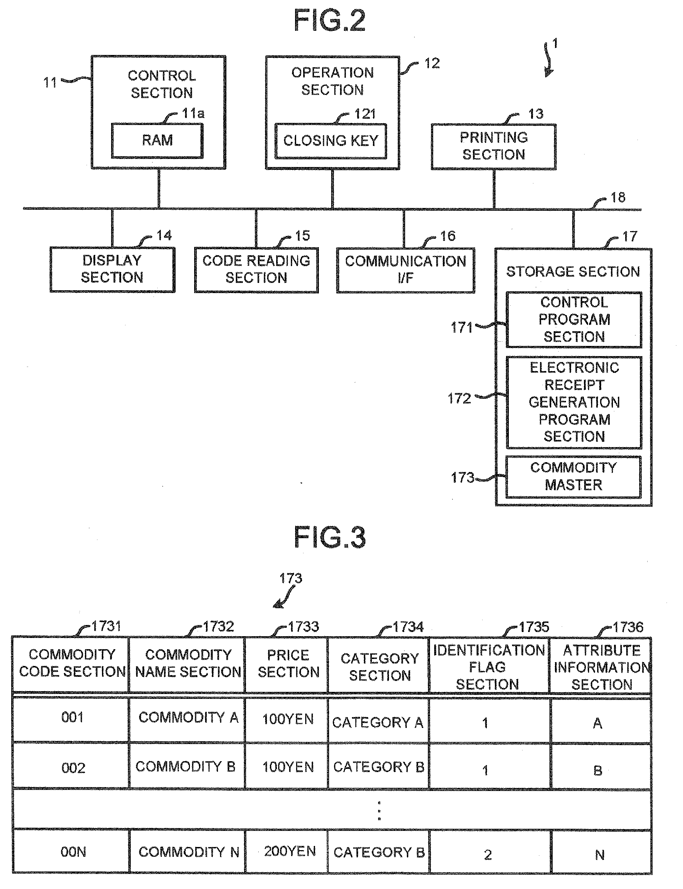

The POS terminal 1 is provided with a commodity master file 173 (refer to Fig. 2) which is referred to as a sales object master file individually built. In the commodity master file 173, commodity information is stored in association with a commodity code serving as a sales object specifying information. The commodity information stored in the commodity master file 173 includes a commodity code, commodity name, price and category of the commodity, identification flag information of the commodity which indicates the commodity is a source marking commodity or an in-store marking commodity and attribute information (allergy and calories) of the commodity described later. The commodity master file 173 is individually built in each store P1 or each company C. The commodity master file 173 stores the commodity information of a commodity individually input by the store P1 or the company C. Thus, even for the same commodity, if the commodity information input in each store P1 or each company C is different, then the commodity information stored in each commodity master file 173 is different.

The POS terminal 1 reads a symbol, such as a barcode, attached to a commodity and reads out the corresponding commodity information of the commodity from the commodity master file 173 according to the commodity code for specifying the commodity included in the read symbol. Then, the POS terminal 1 carries out a commodity sales processing for the sold commodity according to the read commodity information.

In the present embodiment, the POS terminal 1 has the commodity master file 173; however, the store server 2 or the electronic receipt server 3 may have the commodity master file 173. In the latter case, the POS terminal 1 inquires of the store server 2 or the electronic receipt server 3 about the commodity information according to the commodity code read from the symbol. The POS terminal 1 receives the commodity information from the store server 2 or the electronic receipt server 3.

After carrying out a commodity sales processing for each sold commodity, the POS terminal 1 carries out a settlement processing. The settlement processing refers to a processing of calculating the change by deducting the total price or amount of the commodities to which the commodity sales processing is executed from an input payment (receiving) amount and a processing of generating receipt information described later to issue a paper receipt.

The POS terminal 1 generates receipt information according to a transaction content which includes the commodity sales information generated with the commodity sales processing and the settlement information generated with the settlement processing. The POS terminal 1 issues, according to the generated receipt information, a paper receipt on which the receipt information is printed by a printing section 13 (refer to Fig. 2). Instead of the paper receipt, the POS terminal 1 may generate digitized electronic receipt information by converting the data format of the receipt information in an unstructured format into a structured format different from the unstructured format. The generation of the electronic receipt information is also a process of the settlement processing.

The electronic receipt information refers to information generated by converting the receipt information that is normally printed on the receipt paper into information in a structured format such as a CSV (Comma-Separated Values) or a J-son format. The electronic receipt information is generated by the POS terminal 1. The generated electronic receipt information is sent to the electronic receipt management server 4 via the electronic receipt server 3 and then stored in the electronic receipt management server 4.

The POS terminal 1 outputs (sends) the generated electronic receipt information to the electronic receipt server 3 via the network N2. Not specially limited to the sending method of the electronic receipt information, the electronic receipt information may be sent according to a general protocol such as HTTP or HTTPS.

The store server 2 manages the sales of the store P1. The store server 2 is connected with the POS terminal 1 via the communication line N1 arranged in the store P1. The store server 2 manages, according to the sales information generated in the POS terminal 1, the commodity information of the commodity generated with the commodity sales processing in the store P1 and the settlement information generated with the settlement processing executed in the store P1.

The electronic receipt server 3 is arranged in the headquarters P3 of the company C which runs the plurality of stores P1. The electronic receipt server 3 functions as a company-oriented receipt management server which manages, for each company C, the electronic receipt information generated by the POS terminal 1 in the store P1. The electronic receipt server 3 is connected with the POS terminal 1 and the store server 2 arranged in the store P1 via the network N2.

The electronic receipt server 3 is also connected with the POS terminals 1 and the store servers 2 arranged in the other stores P1 via the network N2. In this way, the electronic receipt server 3 separately receives electronic receipt information from the POS terminals 1 in the stores P1 run by the company C.

Further, the electronic receipt server 3 sends the received electronic receipt information to the electronic receipt management server 4 via a network N3 which connects the headquarters P3 with the electronic receipt center P4.

The network N3 is the Internet or a dedicated line such as a VPN. Not specially limited to the sending method of the electronic receipt information, the electronic receipt information may also be sent according to the general protocol such as HTTP or HTTPS.

The electronic receipt management server 4 is arranged in the electronic receipt center P4. The electronic receipt center P4 separately collects the electronic receipt information managed by the company C from the electronic receipt server 3 of each company C to uniformly manage the collected electronic receipt information. The electronic receipt center P4 is a third-party organization other than the headquarters P3 which runs the electronic receipt server 3. Additionally, the electronic receipt server 3 may be managed by the third-party organization.

The electronic receipt management server 4 functions as a member-oriented receipt management server which uniformly manages the electronic receipt information generated by each company C which runs the stores P1. The electronic receipt management server 4 manages the member data of a member who completes a member registration, such as a name and a member ID. The member ID is a reception destination specifying information for specifying the reception destination to which the electronic receipt information is output. The electronic receipt management server 4 stores the member data in a member information section to manage it. Further, in addition to the electronic receipt management server 4, a member management server may also be arranged to manage the member data.

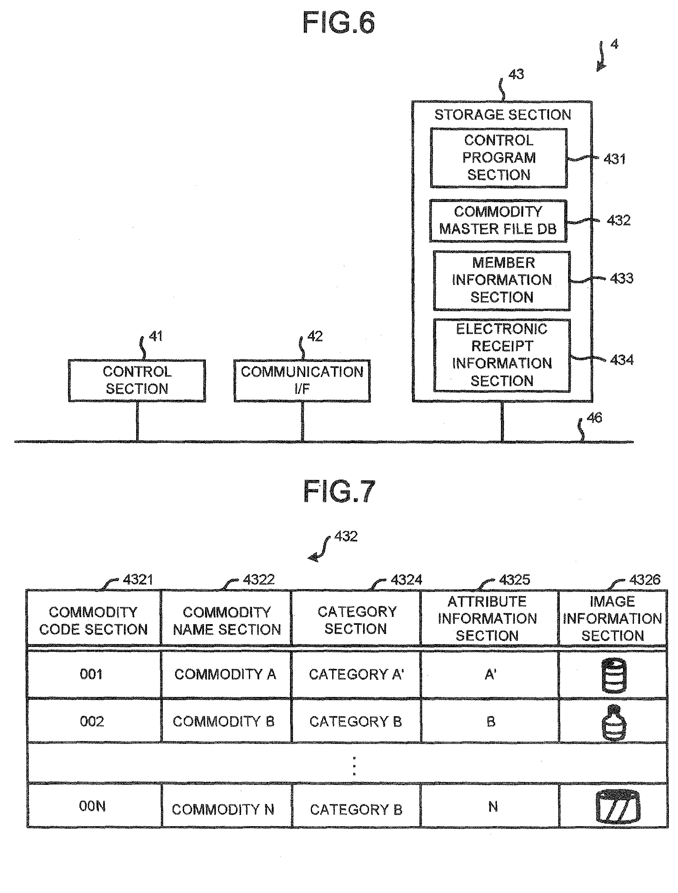

The electronic receipt management server 4 receives the electronic receipt information sent from the electronic receipt server 3 via the network N3 and stores the received electronic receipt information in an electronic receipt information section 434 described later (refer to Fig. 6) kept in a database DB. In addition to the commodity information of the commodity to which the commodity sales processing is executed and the settlement information generated with the settlement processing, the electronic receipt information further contains elements such as a store ID for specifying the store from which the electronic receipt information is sent, a member ID for specifying a member and the like. The electronic receipt management server 4 manages, for each member, the electronic receipt information containing these foregoing elements in the electronic receipt information section 434.

Upon storing the electronic receipt information in the electronic receipt information section 434, the electronic receipt management server 4 retrieves data in a member information section 433 (refer to Fig. 6) and specifies the reception destination receiving the electronic receipt according to the member ID contained in the electronic receipt information. Moreover, the electronic receipt management server 4 notifies, via a network N4 described later, the portable terminal 7 of the reception destination at which the electronic receipt information for the output of the electronic receipt is received.

The reception destination is not always the portable terminal 7. The reception destination may not be a specific portable terminal 7. The reception destination may be, for example, a personal computer, but not the portable terminal 7. Moreover, specifying the reception destination does not mean specifying the portable terminal 7. The reception destination may further be an e-mail address to which the electronic receipt is output.

If receiving a view inquiry information of the electronic receipt of which the member ID is designated from the portable terminal 7 connected via the network N4 described later, the electronic receipt management server 4 generates an electronic receipt based on the electronic receipt information specified with the member ID to output the generated electronic receipt to the portable terminal 7. Then, the portable terminal 7 displays the electronic receipt. The operator of the portable terminal 7 can view the electronic receipt displayed on the portable terminal 7.

The electronic receipt management server 4 is provided with a commodity master DB (Database) 432 (refer to Fig. 6) which is a common sales object master file. The electronic receipt management server 4 is provided with one commodity master DB 432 while other devices are provided with no commodity master DB 432. The commodity master DB 432 stores commodity information, corresponding to a commodity code acting as a sales object specifying information, which is sent from the manufacturer server 8. The commodity information stored in the commodity master DB 432 includes a commodity code, commodity name, category the commodity belongs to, allergy and calories of the commodity, and image of the commodity.

The portable terminal 7 is, for example, a terminal device such as a smart phone, a mobile phone, a PDA (Personal Digital Assistant) or a tablet computer carried by a customer, i.e., a member, or the operator of the present system. Application programs such as a Web browser for viewing various kinds of information provided through the network N4, are installed in the portable terminal 7. The operator is not limited to a member.

The portable terminal 7 is connected with the electronic receipt management server 4 via the network N4. The network N4 is the Internet or various public networks.

The portable terminal 7 receives, via the network N4, a notice, indicating that the electronic receipt is ready for viewing, which is sent from the electronic receipt management server 4. The operator operates the portable terminal 7 to send the view inquiry information of the electronic receipt to the electronic receipt management server 4 via the network N4. Then, the portable terminal 7 displays the electronic receipt of the member output from the electronic receipt management server 4. The operator can view the electronic receipt displayed on the portable terminal 7.

The manufacturer server 8 is arranged in the manufacturer M. The manufacturer server 8 is connected with the electronic receipt server 3 and the electronic receipt management server 4 via the network N3.

The manufacturer server 8 stores the commodity information of a commodity made by the manufacturer. The commodity information stored in the manufacturer server 8 is determined by the manufacturer. For example, the commodity name determined by the manufacturer for a commodity is the formal name of the commodity. The category determined by the manufacturer for a commodity is the formal category the commodity belongs to. The commodity master DB 432 stores unique and common commodity information determined by the manufacturer.

In such an electronic receipt system, in order to be able to view the electronic receipt through the portable terminal 7, the customer carries out a member registration. A customer who completes the member registration is called as a member. The electronic receipt management server 4 distributes a member registration completion e-mail in which a member ID and a password are contained to the portable terminal 7 of the member who completes the member registration. Then, the member registration is ended. After the member registration is completed, a barcode on which the member ID is code-symbolized is displayed on the display section of the authenticated portable terminal 7 the customer logs in. The electronic receipt management server 4 registers member information containing the member ID of the member who completes the member registration in the member information section 433 (refer to Fig. 6).

In the electronic receipt management system with this structure, the electronic receipt information indicating the contents of transacted commodities generated by the POS terminal 1 is sent to the electronic receipt management server 4 to be open to the public on the Web as an electronic receipt. Therefore, the operator can view the electronic receipt open to the public on the Web through the portable terminal 7 having the web browser by designating a URL (Uniform Resource Locator).

Hardware structures of the main devices constituting the electronic receipt system of the embodiment are described with reference to Fig. 2-Fig. 10.

The POS terminal 1 is described first. Fig. 2 is a block diagram illustrating the hardware structure of the POS terminal 1. As shown in Fig. 2, the POS terminal 1 comprises a control section 11 for collectively controlling various operations and each section of the POS terminal 1. The control section 11 is a computer composed of a CPU (Central Processing Unit), a ROM (Read Only Memory), a RAM (Random Access Memory) 11a, an RTC (Real Time Clock) section and so on. The ROM stores various programs and data. The RAM 11a temporarily stores various programs and further stores various data in a rewritable manner. The RTC section counts the current date and time.

The control section 11 is connected with an operation section 12, a printer section 13, a display section 14, a code reading section 15, a communication I/F 16 and a storage section 17 via a bus line 18.

The operation section 12 includes various operating keys for the user to execute an input operation. In addition to numeric keys for the input of numerals and a cursor key and a selection determination key for selecting a specific item, the operating keys further include a closing key 121 for the execution of the settlement processing of one transaction and the completion of the transaction.

The printer section 13 includes a printer device which prints a receipt, a journal, a settlement receipt, an inspection receipt and the like. The printer section 13 prints receipt information on a conveyed lengthwise rolled paper with, for example, a thermal head having a heating medium. The printed receipt information includes the commodity information (commodity name and commodity price) of the commodity purchased in the transaction and the settlement information relating to the settlement processing. Then, the rolled paper is cut off to issue a receipt, a journal or the like.

The display section 14 which is, for example, a liquid crystal display, displays various information such as the name and the price of the sales-registered commodity, the total amount and the change amount of a transaction to which settlement is declared. The display section 14 may be a touch panel which, in this case, functions as the operation section 12.

The code reading section 15 is a scanner device which optically reads a code symbol such as a barcode or a two-dimensional code. The code reading section 15 reads, for example, a code symbol such as a barcode attached to a commodity or a code symbol displayed on the display section of the portable terminal 7. The control section 11 inputs the information represented with the read code symbol. Further, a commodity code for specifying a commodity is contained in the code symbol attached to the commodity. A member ID for specifying the reception destination of the electronic receipt received by the portable terminal 7 is included in the code symbol displayed on the portable terminal 7. The member ID may be magnetically or electrically stored in the portable terminal 7. In this case, the member ID stored in the portable terminal 7 is read with a dedicated reading device. The control section 11 inputs the read member ID.

The control section 11 is connected with the communication I/F (Interface) 16 via the bus line 18 and is connectable with the network N2 via the communication I/F 16.

Further, the control section 11 is connected with the storage section 17 via the bus line 18. The storage section 17 is an auxiliary storage device such as an HDD (Hard Disk Drive) or an SSD (Solid State Drive). The storage section 17 comprises a control program section 171 which stores control programs for the execution of the various jobs in the POS terminal 1. According to the control programs, the control section 11 carries out the processing relating to a commodity sales processing, a receipt information generation processing and a receipt printing processing.

Further, the storage section 17 comprises an electronic receipt generation program section 172 which stores an electronic receipt generation program for generating electronic receipt information from receipt information. The control section 11 drives the electronic receipt generation program to convert receipt information in an unstructured format into electronic receipt information in a structured format according to a conversion rule recorded in a receipt information schema (not shown). In this way, the control section 11 generates electronic receipt information from receipt information.

The electronic receipt information includes a member ID, a company code for specifying the company which runs the store, a store ID for specifying the store P1, a POS No. (number), a receipt No. (number), commodity information and settlement information.

Such a business category and a business style can be optionally changed according to preferences of the user. Further, a company code (the identification code of the company which runs the store) and a business category/business style code may be registered in the electronic receipt server 3. Further, each of the stores run by the same company is assigned with a unique store code so as to be specified.

Further, the storage section 17 comprises a commodity master file 173 which stores the commodity information of a commodity sold in the store P1 corresponding to a commodity code. The commodity information stored in the commodity master file 173 is individually set by the store or company. The commodity information stored in the commodity master file 173 includes a commodity code, a commodity name, a price of commodity, a category the commodity belongs to, an identification flag of the commodity for indicating that the commodity is a source marking commodity or an in-store marking commodity, and attribute information (allergy and calories) of the commodity. The commodity master file 173 stores the commodity information input from the store server 2 of each store P1 or from the electronic receipt server 3 of each headquarters P3.

Next, the commodity master file 173 is described in detail with reference to Fig. 3. The commodity master file 173 comprises a commodity code section 1731, a commodity name section 1732, a price section 1733, a category section 1734, an identification flag section 1735 and an attribute information section 1736. The commodity code section 1731 stores a commodity code for specifying a commodity. The commodity name section 1732 stores, in association with a commodity code, the commodity name of the commodity, specified with the stored commodity code. The price section 1733 stores, in association with a commodity code, the price of the commodity specified with the stored commodity code. The category section 1734 stores, in association with a commodity code, the category of broader concept to which the commodity, specified with the stored commodity code, belongs. The category of broader concept may be a singular class or a plural class. For example, in a case in which the commodity code is 'JAN code' , there is a broader concept of plural class including 'class' as an immediately above concept and 'department' as a further above concept. The broader concept of the present embodiment may be any one of the plural class described above, or all the plural class.

The identification flag section 1735 stores an identification flag for discriminating that a symbol attached to the commodity specified with the stored commodity code is a source marking or an in-store marking. The source marking indicates that the symbol attached to the commodity is set by the manufacturer. Commodities to which the symbol of the source marking is attached are all commodities manufactured by the manufacturer and sold as the same commodities in all companies C or all the stores P1. The same commodity code is attached or set to these same commodities.

On the other hand, the in-store marking indicates that the symbol attached to the commodity is set by the store P1 or the company C. A commodity to which the symbol of the in-store marking is attached is produced in the store P1 or the company C (e.g. packed side dish) and there is a possibility that a commodity with a symbol of the in-store marking is not sold in stores P1 and companies C other than the store P1 or company C that produces the commodity. Even if similar commodities are sold in stores P1 or companies C1 other than the store P1 or company C that produces the commodity, different commodity codes are respectively attached to such similar commodities and thus they are different from each other. In the present embodiment, the identification flag section 1735 stores an identification flag '1' if a symbol of the source marking is attached to a commodity and an identification flag '2' if a symbol of the in-store marking is attached to a commodity.

The attribute information section 1736 stores, in association with a commodity code, the attribute information of the commodity specified with the stored commodity code. The attribute information refers to the allergy information and the calorie information of the commodity. There is a case in which the attribute information section 1736 is not arranged in the commodity master file 173.

Further, in some cases, the store P1 or company C sets an individual commodity name (e.g. a simplified commodity name) for a commodity. Thus, the commodity names of the same commodities stored in the commodity master files 173 are different in individual stores P1 or companies C. Similar to the category of the commodity classified with the broader concept, the categories of the same commodity stored in individual commodity master files 173 may be different.

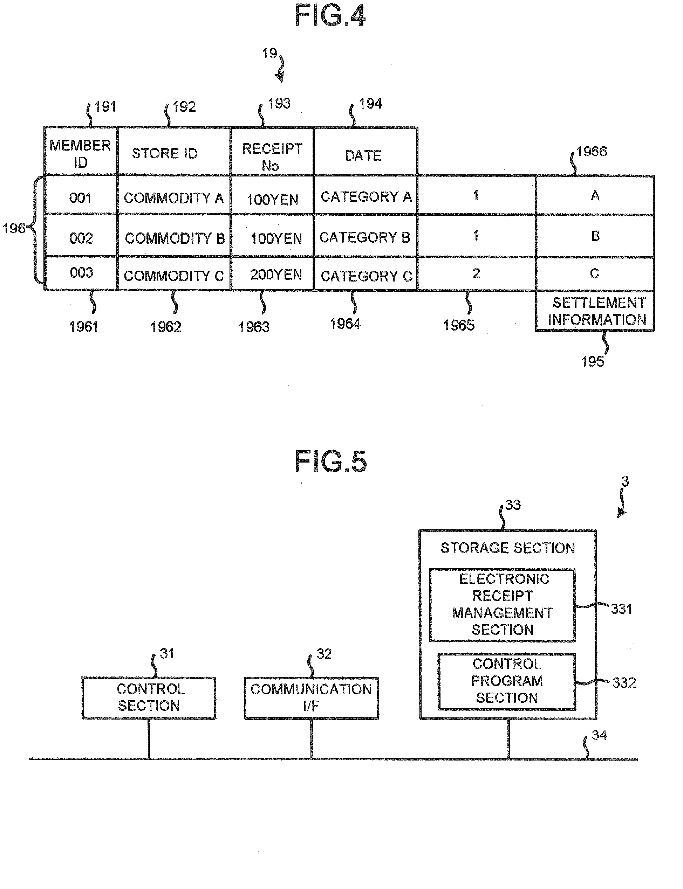

Next, an example of the electronic receipt information 19 generated by the POS terminal 1 is described with reference to Fig. 4. The electronic receipt information 19 in the CSV format is sent to the electronic receipt management server 4 via the electronic receipt server 3.

The electronic receipt information 19 includes a member ID (Identity) 191, a store ID 192, a receipt No. (number) 193, a date 194, settlement information 195 and commodity information 196. The member ID 191 is information for specifying a customer who is a member. Further, the member ID 191 is reception destination specifying information for specifying the reception destination of an electronic receipt. If the member ID 191 is confirmed, then the reception destination of the electronic receipt is determined.

The store ID 192 is information for specifying the store in which the electronic receipt information is generated. The receipt No. 193 is information for specifying the digitized receipt information. The date 194 is the date and time when the electronic receipt information is generated. The settlement information 195 is information generated with a settlement processing carried out in a transaction. The settlement information includes, for example, a total amount, a payment (receiving) amount, a change amount and number of points.

The commodity information 196 is information of a commodity to which a commodity sales processing is carried out in the POS terminal 1. The commodity information is read from the commodity master file 173. The commodity information 196 includes a commodity code 1961, a commodity name 1962, a price 1963, a category 1964, an identification flag 1965 and attribute information 1966.

The commodity code 1961 is a code for specifying a commodity. The commodity name 1962 is the name of the commodity specified according to the commodity code. The price 1963 is the price of the commodity specified according to the commodity code. The category 1964 is the category to which the commodity specified according to the commodity code belongs. The identification flag 1965 is a flag for discriminating that the symbol attached to the commodity specified according to the commodity code is a source marking or an in-store marking. The attribute information 1966 is information of the commodity specified according to the commodity code. The attribute information refers to the allergy information and the calorie information of the commodity. Further, there is a case in which the commodity master file 173 has the attribute information section 1736 in which no attribute information is stored.

In the example shown in Fig. 4, the commodity information of three commodities is digitized as the electronic receipt information. The column 'commodity code' 1961 records commodity codes '001', '002' and '003'. The column 'commodity name' 1962 records a commodity name 'commodity A' corresponding to the commodity code '001', a commodity name 'commodity B' corresponding to the commodity code '002' and a commodity name 'commodity C' corresponding to the commodity code '003'. The column 'price' 1963 records the price '100 Yen' of the commodity A corresponding to the commodity code '001', the price '100 Yen' of the commodity B corresponding to the commodity code '002' and the price '200 Yen' of the commodity C corresponding to the commodity code '003'. The column 'category' 1964 records a 'category A' indicating the category to which the commodity A belongs, a 'category B' indicating the category to which the commodity B belongs and a 'category C' indicating the category to which the commodity C belongs.

The identification flag 1965 is information which is read from the identification flag section 1735 when the POS terminal 1 generates electronic receipt information and then added in the electronic receipt information. The identification flag 1965 includes an identification flag '1' for identifying that a symbol attached to a commodity is set with a source marking and an identification flag '2' for identifying that a symbol attached to a commodity is set with an in-store marking. The identification flag '1' is attached to commodities A and B while the identification flag '2' is attached to the commodity C. The column 'attribute information' 1966 records the attribute information 'A' of the commodity A, the attribute information 'B' of the commodity B and the attribute information 'C' of the commodity C.

Sequentially, the hardware structure of the electronic receipt server 3 functioning as a company-oriented receipt management server is described with reference to the block diagram of Fig. 5. As shown in Fig. 5, the electronic receipt server 3 comprises a control section 31 for collectively controlling various operations and each section of the electronic receipt server 3. The control section 31 is a computer composed of a CPU, a ROM, a RAM, an RTC section and so on. The ROM stores various programs and data. The RAM temporarily stores various programs and further stores various data in a rewritable manner. The RTC section counts the current date and time

The control section 31 can be connected with the networks N2 and N3 via a communication I/F 32 connected with a bus line 34. Further, the control section 31 is connected with a storage section 33 via the bus line 34.

The storage section 33 stores the electronic receipt information of each company C which runs the store P1 in an electronic receipt management section 331. Further, the storage section 33 comprises a control program section 332 which stores a control program for managing the electronic receipt information stored in the electronic receipt management section 331.

Next, the hardware structure of the electronic receipt management server 4 is described with reference to the block diagram of Fig. 6. As shown in Fig. 6, the electronic receipt management server 4 comprises a control section 41 for collectively controlling various operations and each section of the electronic receipt management server 4. The control section 41 is a computer composed of a CPU, a ROM, a RAM, an RTC section and so on. The ROM stores various programs and data. The RAM temporarily stores various programs and further stores various data in a rewritable manner. The RTC section counts the current date and time.

The control section 41 can be connected with the networks N3 and N4 via a communication I/F 42 connected with a bus line 46. Further, the control section 41 is connected with a storage section 43 via the bus line 46.

A control program section 431, a commodity master DB (a common commodity master file) 432, a member information section 433 and an electronic receipt information section 434 are arranged in the storage section 43. The control program section 431 stores a control program for controlling the electronic receipt information in the electronic receipt management server 4.

The commodity master DB 432 stores commodity information for each commodity with a symbol by a source marking sent from the manufacturer server 8. The commodity information stored in the commodity master DB 432 includes a commodity code, commodity name, price of the commodity, category to which the commodity belongs, allergy of the commodity, calories and image of the commodity.

The commodity master DB 432 stores the commodity information created by the manufacturer as it is. Thus, the commodity name stored in the commodity master DB 432 is a formal commodity name created by the manufacturer. The category of broader concept to which the commodity belongs is stored as a category created by the manufacturer as it is.

The commodity master DB 432 is described with reference to Fig. 7. In Fig. 7, the commodity master DB 432 comprises a commodity code section 4321, a commodity name section 4322, a category section 4324, an attribute information section 4325 and an image information section 4326.

The commodity code section 4321 stores a commodity code for specifying a commodity. The commodity name section 4322 stores, in correspondence with the commodity code, the commodity name of the commodity specified with the commodity code. The price section 4323 stores, in correspondence with the commodity code, the price of the commodity specified with the commodity code. The category section 4324 stores, in correspondence with the commodity code, the category of broader concept to which the commodity specified with the commodity code belongs. The attribute information section 4325 stores, in correspondence with the commodity code, the attribute information of the commodity specified with the commodity code. The attribute information refers to the allergy information and the calorie information of the commodity. The image information section 4326 stores, in correspondence with the commodity code, an image (e.g. a picture of the commodity) which visually shows the commodity specified with the commodity code.

In the example shown in Fig. 7, a commodity name 'commodity A', a category 'category A'', attribute information 'A'' and an image of the commodity are stored in correspondence with the commodity code '001'. A commodity name 'commodity B', a category 'category B', attribute information 'B' and an image of the commodity are stored in correspondence with the commodity code '002'. The commodity name, the category, the attribute information and the image of the commodity corresponding to the commodity code '003' are not stored.

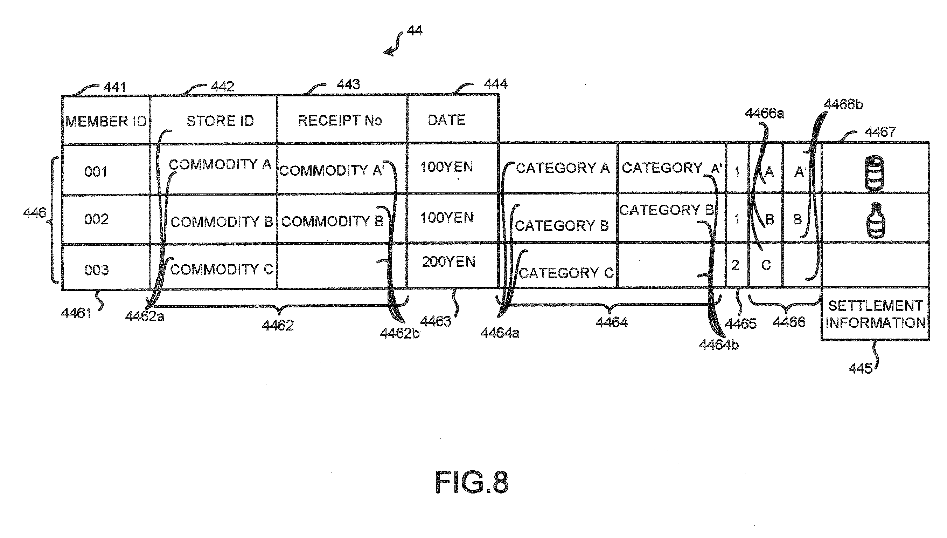

Sequentially, an example of the electronic receipt information 44 stored in the electronic receipt information section 434 of the electronic receipt management server 4 is described with reference to Fig. 8. The electronic receipt information 44 in the CSV format is formed by adding the commodity information stored in the commodity master DB 432 into the electronic receipt information received by the electronic receipt management server 4.

The electronic receipt information 44 includes a member ID (Identity) 441, a store ID 442, a receipt No. (number) 443, a date 444, settlement information 445 and commodity information 446. The member ID 441 is information for specifying a customer who is a member. The member ID 441 is reception destination specifying information for determining the reception destination of an electronic receipt. If the member ID 441 is confirmed, the reception destination of the electronic receipt is determined.

The store ID 442 is an ID for specifying the store in which electronic receipt information is generated. The receipt No. 443 is a number for specifying digitized receipt information. The date 444 is the date and time when the electronic receipt information is generated. The settlement information 445 is information generated with a settlement processing carried out for a transaction. The settlement information includes, for example, a total amount, a payment (receiving) amount, a change amount and number of points.

The commodity information 446 is included in the electronic receipt information received from the POS terminal 1. The commodity information 446 includes a commodity code 4461, a commodity name 4462, a price 4463, a category 4464, an identification flag 4465, attribute information 4466 and image information 4467.

The commodity code 4461 is a code for specifying a commodity. The commodity name 4462 includes a commodity name 4462a and a commodity name 4462b. The commodity name 4462a is contained in the electronic receipt information received from the POS terminal 1. On the other hand, the commodity name 4462b is received from the commodity name section 4322 of the commodity master DB 432.

The commodity name 4462a is a name which is stored in the commodity master file 173 individually built in each store P1 or each company C. Thus, the commodity names 4462a of the same commodity contained in the electronic receipt information may be different if the commodity master files 173 respectively referred are different. On the other hand, the commodity name 4462b is a name created by the manufacturer and stored in the commodity master DB. Thus, the same commodity name 4462b is applied to the same commodities.

In the example shown in Fig. 8, the commodity names 4462a and 4462b corresponding to the commodity code '001' are respectively 'commodity A' and 'commodity A'', which indicates that the different commodity names corresponding to the commodity code '001' are respectively stored in the commodity master file 173 and the commodity master DB 432. Further, the commodity names 4462a and 4462b corresponding to the commodity code '002' are both 'commodity B', which indicates that a same commodity name corresponding to the commodity code '002' is stored in the commodity master file 173 and the commodity master DB 432 . Further, the commodity name 4462a corresponding to the commodity code '003' is 'commodity C' while the commodity name 4462b corresponding to the commodity code '003' is a blank space, which indicates that the commodity name 'commodity C' corresponding to the commodity code '003' is received from the commodity master file 173 but no commodity name is received from the commodity master DB 432. This is because that the identification flag corresponding to the commodity code '003' is '2'.

The price 4463 is a commodity price contained in the electronic receipt information received from the POS terminal 1. The category 4464 is information received from commodity master DB 432. The category 4464 includes a category 4464a and a category 4464b. The category 4464a is a commodity category contained in the electronic receipt information received from the POS terminal 1. On the other hand, the category 4464b is a commodity category received from the category section 4324 of the commodity master DB 432.

The category 4464a is a category stored in the commodity master file 173 individually built in each store P1 or each company C. Thus, the category 4464a of the same commodity contained in each electronic receipt information may be different if the commodity master files 173 respectively referred are different. On the other hand, the category 4464b is a category created by the manufacturer and stored in the commodity master DB. Thus, the same category 4464b is applied to the same commodities.

In the example shown in Fig. 8, the categories 4464a and 4464b corresponding to the commodity code '001' are respectively 'category A' and category A'', which indicates that the different categories corresponding to the commodity code '001' are respectively stored in the commodity master file 173 and the commodity master DB 432 . Further, the categories 4464a and 4464b corresponding to the commodity code '002' are both 'commodity B', which indicates that a same category corresponding to the commodity code '002' is stored in the commodity master file 173 and the commodity master DB 432 . Further, the category 4464a corresponding to the commodity code '003' is 'category C' while the category 4464b corresponding to the commodity code '003' is a blank space, which indicates that the 'category C' corresponding to the commodity code '003' is received from the commodity master file 173 but no commodity category information is received from the commodity master DB 432 because the identification flag corresponding to the commodity code '003' is '2'.

The identification flag 4465 stores the identification flag 1965 which is contained in the electronic receipt information received from the POS terminal 1. The attribute information 4466 is the information received from the commodity master DB 432. The attribute information 4466 includes attribute information 4466a and attribute information 4466b. The attribute information 4466a is the information of the commodity contained in the electronic receipt information received from the POS terminal 1. On the other hand, the attribute information 4466b is the information of the commodity received from the attribute information section 4325 of the commodity master DB 432.

The attribute information 4466a is the information stored in the commodity master file 173 individually built in each store P1 or each company C. Thus, the attribute information 4466a of the same commodity contained in each electronic receipt information may be different if the commodity master files 173 respectively referred are different. On the other hand, the attribute information 4466b is information created by the manufacturer and stored in the commodity master DB. Thus, the same attribute information 4466b is applied to the same commodities.

In the example shown in Fig. 8, the attribute information 4466a and the attribute information 4466b corresponding to the commodity code '001' are respectively 'attribute information A' and 'attribute information A'', which indicates that different attribute information corresponding to the commodity code '001'is stored in the commodity master file 173 and the commodity master DB 432. Further, the attribute information 4466a and the attribute information 4464b corresponding to the commodity code '002' are both 'attribute information B', which indicates that the same attribute information corresponding to the commodity code '002' is stored in the commodity master file 173 and the commodity master DB 432. Further, the attribute information 4466a corresponding to the commodity code '0003' is 'attribute information C' while the attribute information 4466b corresponding to the commodity code '003' is a blank space, which indicates that 'attribute information C' corresponding to the commodity code '003' is received from the commodity master file 173 but no attribute information is received from the commodity master DB 432 because the identification flag corresponding to the commodity code '003' is '2'.

Further, the image information 4467 is the information received from the commodity master DB 432. Image information of the commodities of which the commodity codes are '001' and '002'is received from the commodity master DB 432. On the other hand, the identification flag corresponding to the commodity code '003' is '2', thus, no image information of the commodity of which the commodity code is '003' is received from the commodity master DB 432.

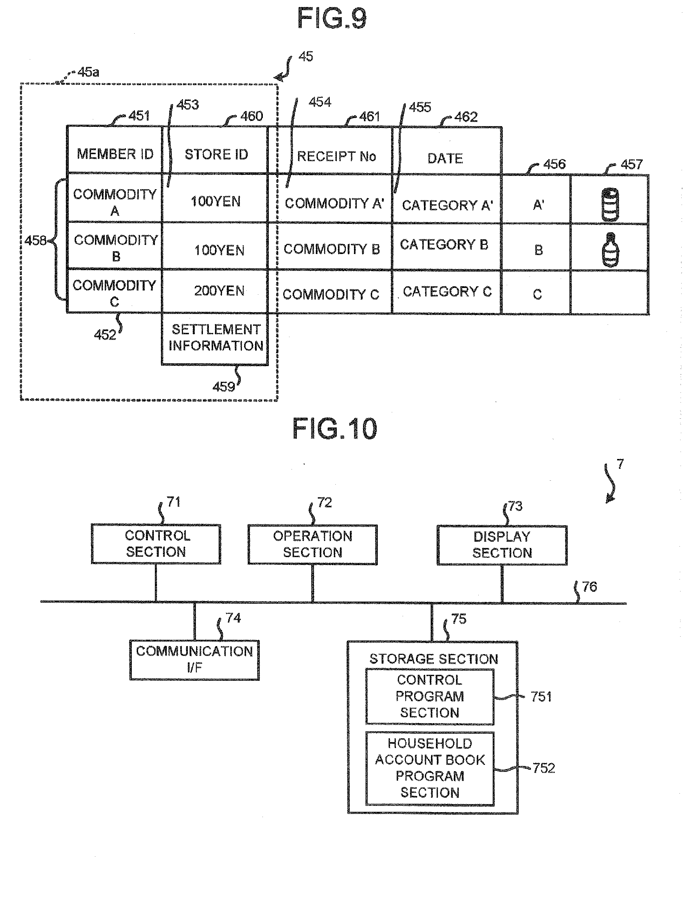

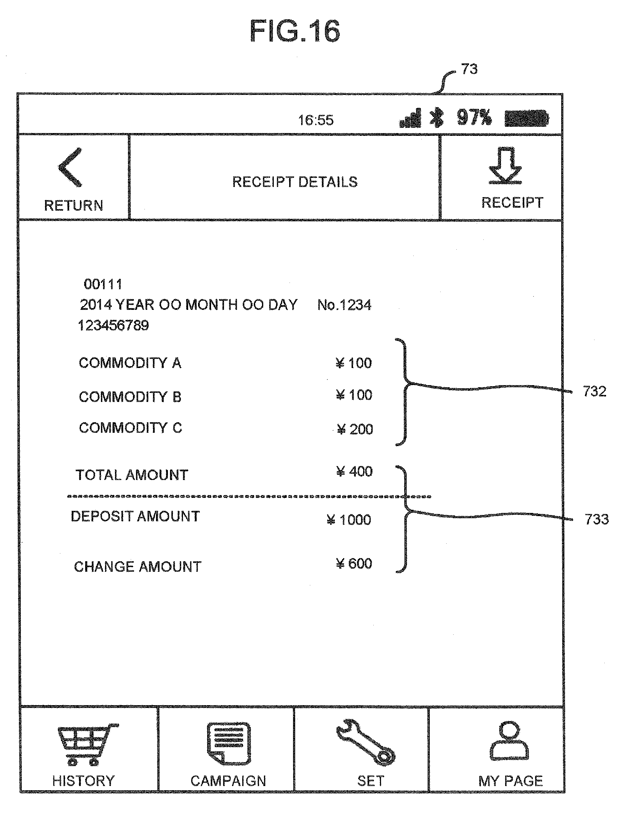

The structure of an electronic receipt 45 output from the electronic receipt management server 4 to the portable terminal 7 is described with reference to Fig. 9. The electronic receipt 45 includes an electronic receipt 45a displayed on the portable terminal 7 and other information. The electronic receipt 45a displayed on the portable terminal 7 is information generated by converting each information of a member ID 451, a commodity name 452 and a price 453 contained in commodity information 458, settlement information 459, a store ID 460, a receipt No. (number) 461, and a date 462 into, for example, an HTML (Hyper Text Markup Language) format. The electronic receipt converted into HTML format to be displayed on the portable terminal 7 can be displayed by the portable terminal 7 (refer to Fig. 16).

The member ID 451 is the member ID presented in the item 'member ID 441'. The settlement information 459 is the same as the settlement information 445. The store ID 460 is a store ID for specifying the store in which electronic receipt information is generated. The receipt No. 461 is a receipt No. for specifying digitized receipt information. The date 462 is the date and time when electronic receipt information is generated.

The commodity information 458 includes a commodity name 452, a price 453, a commodity name 454, a category 455, attribute information 456 and image information 457. The commodity name 452 is the commodity name presented in the item 'commodity name' 4462a. The price 453 is the price presented in the item 'price' 4463. The commodity name 454 is the commodity name presented in the item 'commodity name' 4462b. The category 455 is the category presented in the item 'category' 4464. The attribute information 456 is the attribute information presented in the item 'attribute information' 4466. The image information 457 is the image information presented in the item 'image information' 4467.

Further, other information of the electronic receipt, i.e., the commodity name 454, the category 455, the attribute information 456 and the image information 457 is maintained in the CSV format and is not displayed on the portable terminal 7. Further, by tapping the displayed commodity name 452, the image information 457 is overlapped on the electronic receipt to be displayed in a pop-up manner.

Further, in Fig. 9, if the category 4464b is stored, the category 455 is the category 4464b; otherwise, the category 455 is the category 4464a. Further, if the attribute information 4466b is stored, the attribute information 456 is the attribute information 4466b; otherwise, the attribute information 456 is the attribute information 4466a.

Next, the hardware structure of the portable terminal 7 is described with reference to the block diagram of Fig. 10. As shown in Fig. 10, the portable terminal 7 comprises a control section 71 for collectively controlling various operations and each section of the portable terminal 7. The control section 71 is a computer composed of a CPU, a ROM, a RAM, an RTC section and so on. The ROM stores various programs and data. The RAM temporarily stores various programs and further stores various data in a rewritable manner. The RTC section counts the current date and time.

The control section 71 is connected with an operation section 72 and a display section 73 via a bus line 76. The operation section 72 includes various operating keys for the operator (member) to carry out an input operation and a pointing device. The display section 73 which is, for example, a liquid crystal panel, displays various kinds of information such as the electronic receipt described later. The display section 73 may be a touch panel, and in this case, the touch panel functions as the operation section 72.

Further, the control section 71 connected with a communication I/F 74 via the bus line 76 can be connected with the network N4 via the communication I/F 74.

Further, the control section 71 is connected with a storage section 75 via the bus line 76. In addition to a Web browser for browsing the various kinds of information (contents) open to the public on the Web, the storage section 75 also comprises a control program section 751 for storing a control program for receiving the electronic receipt from the electronic receipt management server 4 and a household account book program section 752 for storing a household account book program. The household account book program is, for example, an application software available on the market, and has a function of creating a household account book with the electronic receipt output from the electronic receipt management server 4.

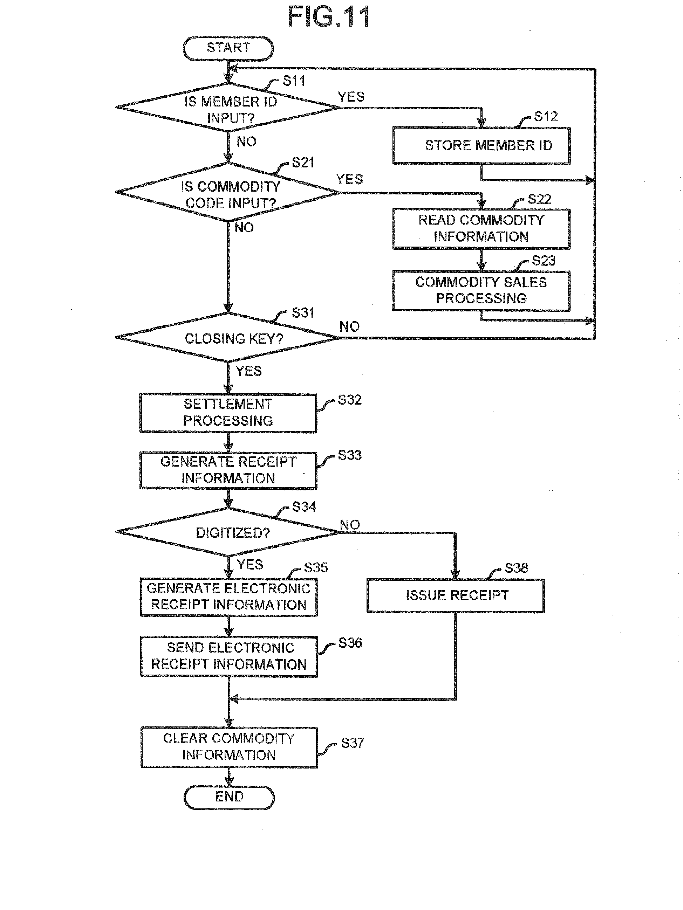

Next, a control processing carried out by the electronic receipt system according to the present embodiment is described with reference to Fig. 11-Fig. 17. First, the flow of the control processing carried out by the control section 11 of the POS terminal 1 according to a control program or an electronic receipt generation program is described with reference to Fig. 11.

In Fig. 11, the control section 11 determines whether or not the member ID read by the code reading section 15 is input (S11). If it is determined that the member ID is input (S11: Yes), the control section 11 stores the member ID in the RAM 11a (S12).

On the other hand, if it is determined that the member ID is not input (S11: No), the control section 11 determines whether or not the commodity code read by the code reading section 15 is input (S21). If it is determined that the commodity code is input (S21: Yes), the control section 11 inquires of the commodity master file 173 about commodity information according to the input commodity code. The control section 11 reads out the commodity information corresponding to the commodity code from the commodity master file 173 (S22). Moreover, the control section 11 stores the read commodity information in the RAM 11a to execute a commodity sales processing (S23).

If it is determined that no commodity code is input (S21: No), the control section 11 determines whether or not the closing key 121 is operated (S31). If it is determined that the closing key 121 is operated (S31: Yes), the control section 11 carries out a settlement processing (S32). Moreover, the control section 11 generates receipt information in an unstructured format according to the commodity information stored in the RAM 11a in Act S23 and the settlement information generated in the settlement processing (S33).

Sequentially, the control section 11 determines whether or not the receipt information generated in Act S33 (S34) is digitized. The control section 11 determines to digitize the receipt information if the member ID is stored in the RAM 11a based on the processing in Act S12. In a case of determining to digitize the receipt information (S34: Yes), the control section 11 generates the electronic receipt information shown in Fig. 4 according to the receipt information (S35). The generated electronic receipt information contains the member ID.

Then, the control section 11 sends the generated electronic receipt information to the electronic receipt server 3 (S36). Sequentially, the control section 11 clears the member ID and the commodity information stored in Act S12 and Act S23 (S37). Then, the control section 11 ends the processing.

Further, in a case of determining not to digitize the generated receipt information (S34 : No), the control section 11 drives the printer section 13 to issue a paper receipt on which the receipt information is printed (S38) . Moreover, the control section 11 executes the processing in Act S37. If it is determined that the closing key 121 is not operated (S31: No), the control section 11 returns to S11 to maintain a standby state.

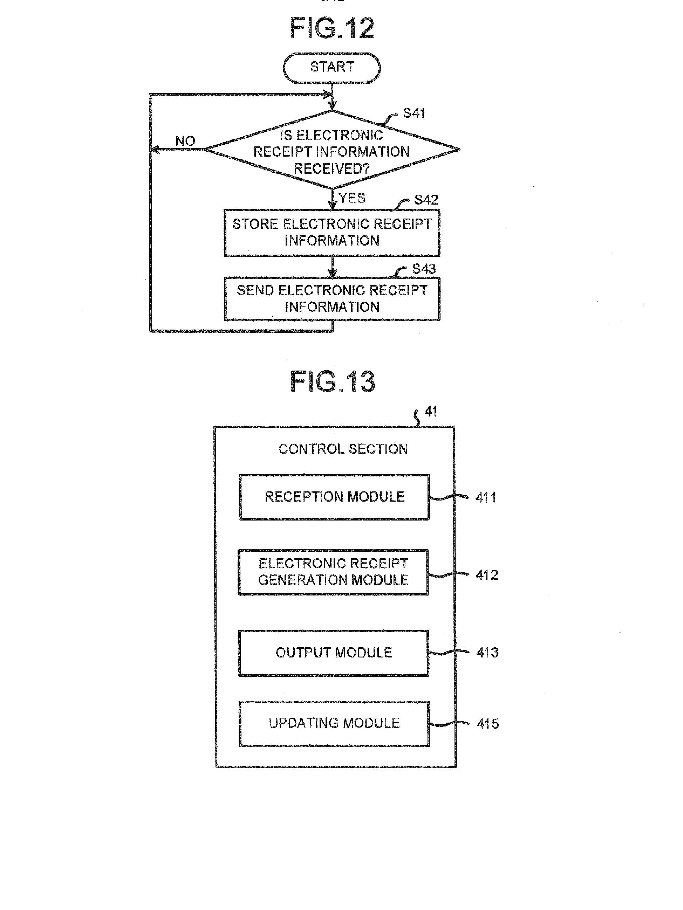

Next, the flow of a control processing carried out by the control section 31 of the electronic receipt server 3 according to a control program stored in the control program section 332 is described with reference to the flowchart shown in Fig. 12.

The control section 31 of the electronic receipt server 3 determines whether or not the electronic receipt information sent in Act S36 is received from the POS terminal 1 via the communication I/F 32 (S41). If it is determined that the electronic receipt information is received from the POS terminal 1 (S41: Yes), the control section 31 stores the received electronic receipt information in the electronic receipt management section 331 of the storage section 33 as the electronic receipt information of each company (S42). Then, the control section 31 sends the stored electronic receipt information to the electronic receipt management server 4 (S43). Moreover, the control section 31 returns to S41 to enter into a standby state. If it is determined that no electronic receipt information is received (S41: No), the control section 31 returns to S41 to maintain a standby state.

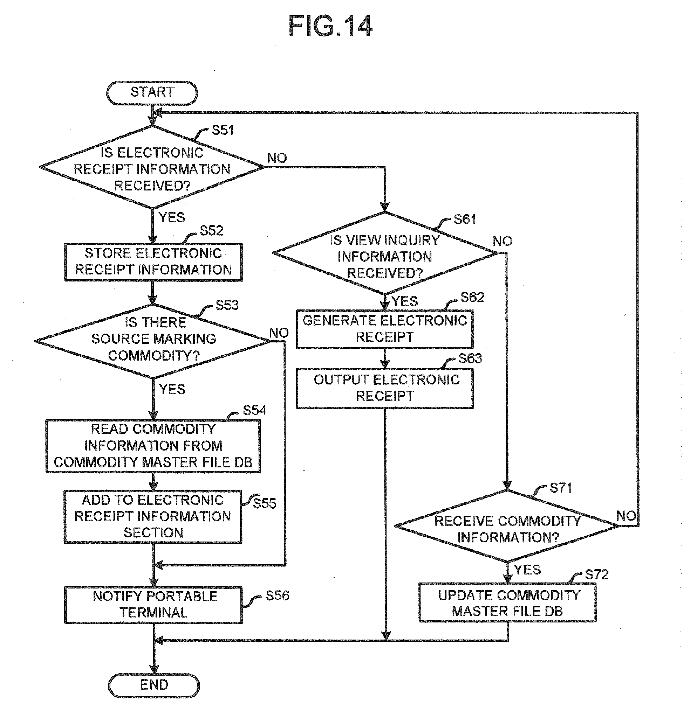

Sequentially, a control processing carried out by the control section 41 of the electronic receipt management server 4 according to a control program stored in the control program section 431 is described with reference to the functional block diagram of Fig. 13 and the flowchart of Fig. 14.

Fig. 13 is a functional block diagram illustrating the functions executed by the control section 41 of the electronic receipt management server 4. In Fig. 13, by executing a control program stored in the control program section 431, the control section 41 functions as a reception module 411, an electronic receipt generation module 412, an output module 413, a determination module 414 and an updating module 415.

The reception module 411 has a function of respectively receiving the electronic receipt information generated based on the individual commodity information corresponding to the commodity code for determining the commodity stored in the commodity master file 173 which is individually built.

The electronic receipt generation module 412 has a function of generating the electronic receipt by adding the common commodity information corresponding to the commodity code stored in the commodity master DB 432 to the received electronic receipt information.

The output module 413 has a function of outputting the generated electronic receipt to the reception destination which receives the generated electronic receipt.

The updating module 415 has a function of updating the common commodity information stored in the commodity master DB 432 according to common commodity information input from an external device.

Fig. 14 is a flowchart illustrating the flow of a control processing carried out by the electronic receipt management server 4.

In Fig. 14, the control section 41 (reception module 411) determines whether or not electronic receipt information is received from the electronic receipt server 3 (S51). If it is determined that the electronic receipt information is received (S51: Yes), the control section 41 stores the received electronic receipt information in the electronic receipt information section 434 in correspondence with the member ID of each member(S52).

Then, the control section 41 determines whether or not the received electronic receipt information 19 contains the commodity information with the source marking according to the identification flag 1965 of the electronic receipt information 19 (S53). If it is determined that the electronic receipt information 19 contains the commodity information with the source marking (S53: Yes), the control section 41 retrieves the commodity master DB 432 according to the commodity code contained in the electronic receipt information 19 which is determined that it contains the commodity information with the source marking. The control section 41 reads out the commodity information corresponding to the commodity code from the commodity master DB 432 (S54) . The control section 41 adds the read commodity information to the electronic receipt information stored in the electronic receipt information section 434 (S55). The added electronic receipt information is shown in Fig. 8.

The control section 41 stores, in correspondence with each commodity code, the commodity name read from the commodity name section 4322 as the commodity name 4462b. The control section 41 stores the category read from the category section 4324 as the category 4464. The control section 41 stores the attribute information read from the attribute information section 4325 as the attribute information 4466. The control section 41 stores the image information read from the image information section 4326 as the image information 4467. The commodity name 1962 contained in the received electronic receipt information 19 is stored as the commodity name 4462a. Next, the control section 41 notifies the portable terminal 7 of information indicating that electronic receipt information is received (S56). Then, the control section 41 ends the processing.

Further, if it is determined that no electronic receipt information is received from the electronic receipt server 3 (S51: No), the control section 41 determines whether or not the view inquiry information of the electronic receipt is received from the portable terminal 7 (S61). If it is determined that the view inquiry information of the electronic receipt is received (S61: Yes), the control section 41 (the electronic receipt generation module 412) extracts the electronic receipt information from the electronic receipt information section 434, using the member ID received at the same time to generate an electronic receipt (S62). The control section 41 (output module 413) outputs the generated electronic receipt to the portable terminal 7 (S63). The operator of the portable terminal 7 can view the electronic receipt displayed on the portable terminal 7. Then, the control section 41 ends the processing.

If it is determined that no view inquiry information is received (S61: No), the control section 41 determines whether or not new commodity information or change information to the commodity information is received from the manufacturer server 8 (S71). If it is determined that the new commodity information or the change information is received from the manufacturer server 8 (S71: Yes), the control section 41 (updating module 415) updates the commodity master DB 432 according to the received information (S72). Then, the control section 41 ends the processing. If it is determined that no new commodity information or no change information is received from the manufacturer server 8 (S71: No), the control section 41 returns to S51 to enter into a standby state.

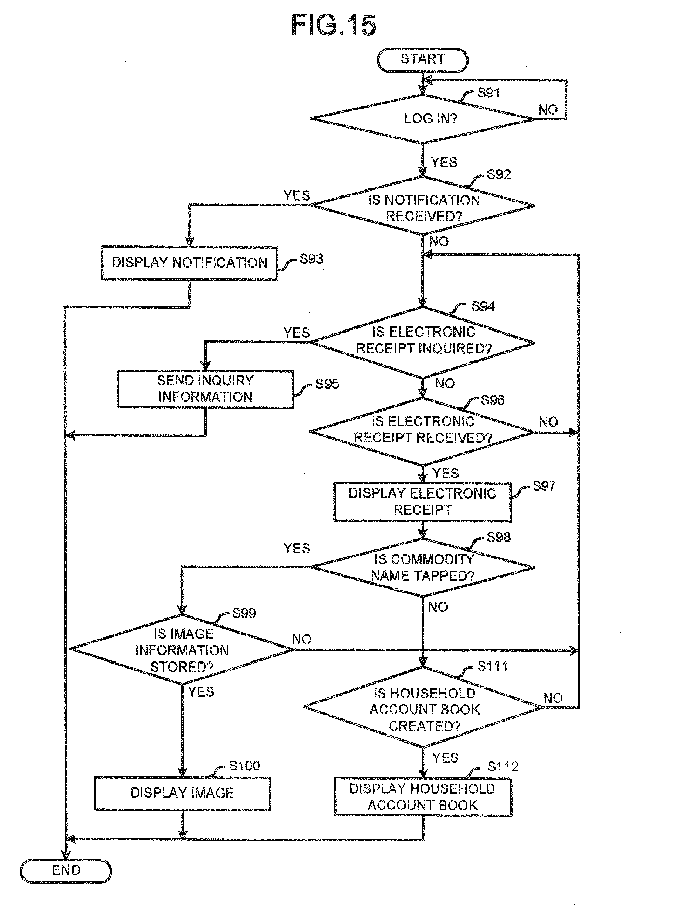

Next, a control processing carried out by the control section 71 of the portable terminal 7 according to a control program stored in the control program section 751 and a household account book program stored in the household account book program section 752 is described with reference to the flowchart of Fig. 15. In Fig. 15, the control section 71 determines whether or not the user carries out a log-in operation to view the electronic receipt (S91). The control section 71 waits for until the user executes a log-in operation (S91: No). If it is determined that the log-in operation is executed (S91: Yes), the control section 71 determines whether or not a notification indicating that electronic receipt information is received is received from the electronic receipt management server 4 (S92). If it is determined that the notification is received from the electronic receipt management server 4 (S92: Yes), the control section 71 displays the received notification on the display section 73 (S93). The notification is, for example, a message 'Your electronic receipt is kept'. Then, the control section 71 ends the processing.

If it is determined that no notification is received from the electronic receipt management server 4 (S92: No), the control section 71 determines whether or not the inquiry of viewing the electronic receipt is operated (S94). If it is determined that the inquiry of viewing the electronic receipt is operated (S94: Yes), the control section 71 sends inquiry information requesting the view of the electronic receipt to the electronic receipt management server 4 (S95). Then, the control section 71 ends the processing. The electronic receipt management server 4 receiving the inquiry information executes the processing in S61-S63 shown in Fig. 14 to output the electronic receipt to the portable terminal 7.

On the other hand, if it is determined that the inquiry of viewing the electronic receipt is not operated (S94: No), the control section 71 determines whether or not the electronic receipt is received from the electronic receipt management server 4 (S96). If it is determined that the electronic receipt is received from the electronic receipt management server 4 (S96: Yes), the control section 71 displays one of the received electronic receipts which is displayed on the portable terminal 7 on the display section 73 (S97).

Fig. 16 is a diagram exemplifying the one of the electronic receipts, displayed on the display section 73 in Act S97, which is displayed on the portable terminal 7. In Fig. 16, the display section 73 displays commodity information 732 consisting of a commodity name and a commodity price and settlement information 733 including a total amount, a deposit amount and a change amount. Further, the display section 73 displays a member ID, a store ID, a receipt No. (number) and a date. The commodity name in the electronic receipt displayed on the display section 73 is the commodity name 452.

On the other hand, the commodity name 454, the category 455, the attribute information 456 and the image information 457 are not displayed on the display section 73.

Returning to Fig. 15, the control section 71 determines whether or not the commodity name in the electronic receipt displayed in Act S97 is tapped (S98). If it is determined that the commodity name in the electronic receipt is tapped (S98 : Yes), the control section 71 determines whether or not the image information 457 is stored (S99). If it is determined that the image information 457 is stored (S99: Yes), the control section 71 displays the image over the electronic receipt displayed on the display section 73 in a pop-up manner (S100). On the other hand, if it is determined that no image information is stored (S99: No), the control section 71 returns to S94 to enter into a standby state.

If it is determined that the commodity name in the electronic receipt is not tapped (S98: No), the control section 71 determines whether or not the household account book program for creating a household account book is started (S111). If it is determined that the household account book program is started (S111: Yes), the control section 71 displays, on the display section 73, the household account book according to the electronic receipt (S112). Further, if it is determined that no electronic receipt is received (S96: No) and that the household account book program is not started (S111: No), the control section 71 returns to execute the processing in S94.

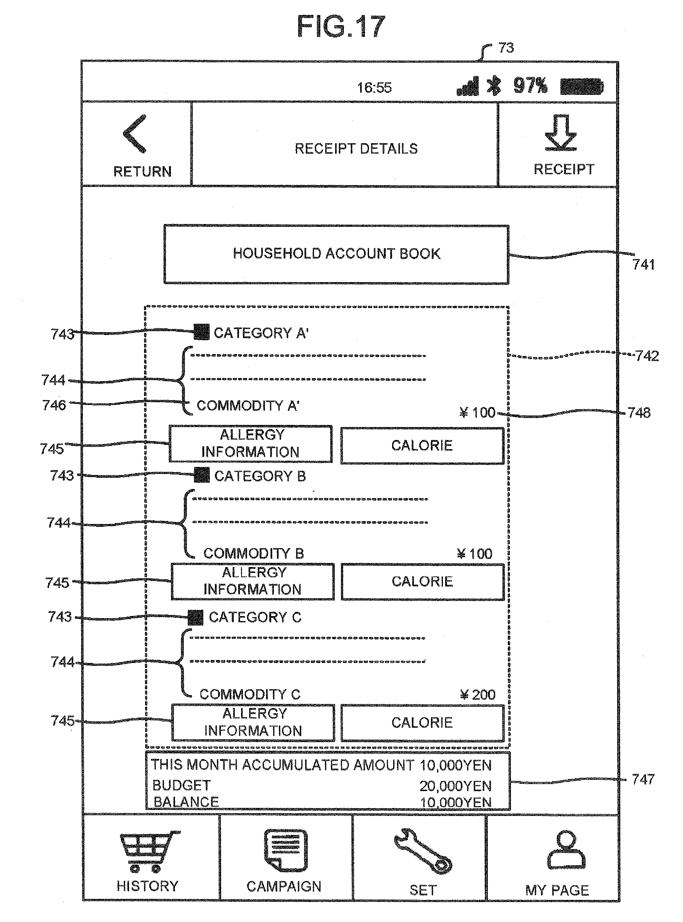

An example of the household account book displayed on the display section 73 in S112 is displayed in Fig. 17. This example is, for example, a household account book for aggregating a monthly household income and expenditure. In Fig. 17, the control section 71 displays, on the display section 73, a display 'household account book' 741, a commodity information list 742 of purchased commodities and a monthly household income and expenditure 747. The commodity information list 742 is displayed in such a manner that commodity information 744 is arranged for each category 743 to which each commodity belongs. The commodity information of currently purchased commodities is displayed on the bottom of the commodity information list 742, accompanied with attribute information 745 including the allergy information and the calories.

The category displays the information of the category 455 contained in the electronic receipt 45. The commodity name 746 displays the information of the commodity name 454 contained in the electronic receipt 45. The attribute information 745 displays the attribute information 456 contained in the electronic receipt 45. The price 748 displays the price 453 contained in the electronic receipt 45. Further, the image information 457 and the commodity name of each commodity can be displayed side by side as household account book information.

According to such an embodiment described above, even if the POS terminals 1 create electronic receipt information based on commodity information individually created in a plurality of stores P1 or companies C, the electronic receipt management server 4 can replace the commodity information of the electronic receipt information with the commodity information stored in the unique commodity master DB 432 to generate an electronic receipt. Thus, the same commodities are applied with the same commodity information. Thus, the same commodities included in a plurality of electronic receipts can be managed with the same commodity information.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

For example, it is described in the foregoing embodiments that the commodity information contained in the electronic receipt information received from the POS terminal 1 includes a commodity code, commodity name, price, category to which the commodity belongs, identification flag and attribute information of the commodity; however, the commodity information may include only a commodity code, a commodity name and price of a commodity.

Moreover, the commodity name, the category and the attribute information of a commodity are replaced in the foregoing embodiments; however, the replaced item may be either of the name and the category of the commodity.

Further, the commodity information stored in the commodity master DB 432 is received from the manufacturer server 8 arranged in the manufacturer in the foregoing embodiments; however, the commodity information from each manufacturer may also be received from a server of a third-party organization to which transmission of the commodity information is entrusted from each manufacturer.

Moreover, a commodity is exemplified as a sales object in the foregoing embodiments. Except for a commodity, the sales object may also be a service.

The program executed by the electronic receipt management server 4 in the foregoing embodiments is recorded in a computer-readable recording medium such as a CD-ROM, a FD (Floppy Disk), a CD-R and a DVD (Digital Versatile Disk) in the form of installable or executable file and is provided.

Further, the program executed by the electronic receipt management server 4 in the foregoing embodiments is stored in a computer connected with a network such as an Internet and downloaded from the network. Alternatively, the program executed by the electronic receipt management server 4 in the foregoing embodiments may be provided or distributed by a network such as the Internet.

Alternatively, the program executed by the electronic receipt management server 4 of the embodiments may be provided by being incorporated in the ROM in advance.

## Claims

1. An information processing apparatus, comprising:
a reception module configured to respectively receive electronic receipt information, stored in a sales object master files individually built, which is generated according to individual sales object information corresponding to sales object specifying information for specifying a sales object;
an electronic receipt generation module configured to generate an electronic receipt by adding common sales object information, stored in a common sales object master file, which corresponds to the sales object specifying information to the received electronic receipt information; and
an output module configured to output the generated electronic receipt to a reception destination which receives the generated electronic receipt.

2. The information processing apparatus according to claim 1, wherein the electronic receipt generation module generates the electronic receipt without displaying the added common commodity object information as the electronic receipt information.

3. The information processing apparatus according to claim 1 or 2, wherein the electronic receipt generation module adds the common sales object information to the individual sales object information if the received electronic receipt information contains the individual sales object information to which the common sales object information is added.

4. The information processing apparatus according to any one of claims 1 to 3, further comprising an updating module configured to update the common sales object information stored in the common sales object master file according to the common sales object information input from an external device.

5. The information processing apparatus according to any one of claims 1 to 4, wherein one of the sales object master files individually built is applied to the common sales object master file.

6. A method for generating an electronic receipt, including:
respectively receiving electronic receipt information, stored in a sales object master files individually built, which is generated according to individual sales object information corresponding to sales object specifying information for specifying a sales object;
generating an electronic receipt by adding common sales object information, stored in a common sales object master file, which corresponds to the sales object specifying information to the received electronic receipt information; and
outputting the generated electronic receipt to a reception destination which receives the generated electronic receipt.

7. The method according to claim 6, further comprising generating the electronic receipt without displaying the added common commodity object information as the electronic receipt information.

8. The method according to claim 6 or 7, further comprising adding the common sales object information to the individual sales object information if the received electronic receipt information contains the individual sales object information to which the common sales object information is added.

9. The method according to any one of claims 6 or 8, further comprising updating the common sales object information stored in the common sales object master file according to the common sales object information input from an external device.

10. The method according to any one of claims 6 or 9, wherein one of the sales object master files individually built is applied to the common sales object master file.
